## Europäisches Patentamt

(19) **European Patent Office**

**Office européen des brevets**

(11) Veröffentlichungsnummer: **0 108 952**
**B1**

(12) # EUROPÄISCHE PATENTSCHRIFT

(45) Veröffentlichungstag der Patentschrift:
**12.08.87**

(21) Anmeldenummer: **83110419.5**

(22) Anmeldetag: **19.10.83**

(51) Int. Cl.⁴: **G 05 D 11/00,** C 02 F 1/68,
B 01 J 4/02

(54) **Dosiervorrichtung zum Einspeisen von Flüssigkeiten in strömende Medien.**

(30) Priorität: **20.10.82 DE 3238771**

(43) Veröffentlichungstag der Anmeldung:
**23.05.84 Patentblatt 84/21**

(45) Bekanntmachung des Hinweises auf die Patenterteilung:
**12.08.87 Patentblatt 87/33**

(84) Benannte Vertragsstaaten:
**AT BE CH DE FR GB IT LI LU NL**

(56) Entgegenhaltungen:
**EP-A-0 007 109**
**EP-A-0 043 363**
**CH-A-384 230**
**DE-A-2 629 609**
**DE-A-2 725 475**
**DE-C-883 662**
**US-A-3 971 341**

(73) Patentinhaber: **Joh.A. Benckiser Wassertechnik GmbH, Postfach 1140 Industriestrasse, D-6905 Schriesheim (DE)**

(72) Erfinder: **Dobrocsi, Béla, Konrad- Adenauer- Strasse 55, D-6940 Weinheim (DE)**
Erfinder: **Dielmann, Rold, Königsberger Strasse 38, D-6840 Lampertheim (DE)**

(74) Vertreter: **Patentanwälte Dr. Ing. Eugen Maier Dr. Ing. Eckhard Wolf, Pischekstrasse 19, D-7000 Stuttgart 1 (DE)**

LIBER, STOCKHOLM 1987

## Beschreibung

Die Erfindung betrifft eine Dosiervorrichtung zum mengenproportionalen Einspeisen von Dosierflüssigkeit in ein strömendes Medium der im Oberbegriff des Anspruchs 1 angegebenen Gattung.

Es ist eine Dosiervorrichtung dieser Art bekannt (DE-A-2 752 475), die einen in einer Leitung für das strömende Medium angeordneten, die Leitung in einen stromauf- und stromabliegenden Teil unterteilenden, nach Maßgabe der Druckdifferenz in ihrem Durchtrittsquerschnitt veränderbaren und bei Stillstand des Mediums schließenden Differenzdruckgeber aufweist. Weiter ist dort ein mit dem stromaufliegenden Leitungsteil verbundener, durch einen Arbeitskolben in zwei Räume geteilter Arbeitszylinder vorgesehen, dessen Arbeitskolben starr mit einem Dosierkolben verbunden ist. Der Dosierkolben greift in einen Dosierzylinder ein, der auf der einen Seite mit einer ein Rückschlagventil enthaltenden, zu einem Dosierflüssigkeitsbehälter führenden Saugleitung und auf der anderen Seite mit einer an ihrer Mündung in den stromabliegenden Leitungsteil führenden, ein Rückschlagventil enthaltenden Impfleitung verbunden ist. Der Antrieb des Arbeitszylinders erfolgt dort durch einen in die Flüssigkeitsleitung eingesetzten Wassermotor und einen durch diesen bewegten 4/2-Wegeschieber. Diese Antriebsart hat jedoch den Nachteil, daß sie insbesondere bei niedriger Strömungsgeschwindigkeit ungenau arbeitet und wegen umlaufender Teile störungsanfällig ist. Da mit dem Wassermotor intermittierend stoßweise dosiert wird und die Impfleitung einen konstanten Mündungsquerschnitt aufweist, läßt sich mit der bekannten Dosiervorrichtung keine kontinuierliche Dosiercharakteristik erzielen.

Weiter ist es bei einer Vorrichtung zum Steuern von Durchflußmengen in Leitungen an sich bekannt (CH-A-384 230), eine Impfleitung für die Chemikalienzufuhr zu verwenden, deren Mündungsquerschnitt entsprechend dem Öffnungszustand des in der Flüssigkeitsleitung angeordneten Hauptventils verändert wird.

Der Erfindung liegt die Aufgabe zugrunde, eine Dosiervorrichtung zum mengenproportionalen Einspeisen von Dosierflüssigkeit in ein strömendes Medium zu schaffen, die sich durch hohe Dosiergenauigkeit und geringe Störanfälligkeit auszeichnet und eine gleichmäßige Zufuhr an Dosierflüssigkeit gewährleistet.

Zur Lösung dieser Aufgabe wird gemäß der Erfindung vorgeschlagen, daß einer der Arbeitszylinderräume mit dem stromaufliegenden Leitungsteil verbunden ist und der andere Arbeitszylinderraum mit einem unter Atmosphärendruck stehenden oder mit dem stromabliegenden Leitungsteil verbundenen Abwasserablauf verbindbar ist, daß der Arbeitskolben zur stromaufliegenden Anschlußseite hin eine kleinere Kolbenfläche als auf der gegenüberliegenden Seite aufweist und daß der Mündungsquerschnitt der Impfleitung proportional zum momentanen Blendenquerschnitt einstellbar ist.

Die erfindungsgemäße Dosiervorrichtung läßt sich in konstruktiver Hinsicht relativ einfach realisieren und weist wegen der wenigen bewegten Teile eine hohe Betriebszuverlässigkeit auf.

Unter Einfluß der Druckdifferenz bei einer Entnahme im stromabliegenden Teil der Flüssigkeitsleitung wird die Blende bzw. das Kegelventil im Verhältnis der in der Zeiteinhet durchströmenden Flüssigkeitsmenge geöffnet (Rotameter-Prinzip). Dabei wird in den stromabliegenden Teil der Leitung Dosierflüssigkeit eindosiert. Von Vorteil ist dabei, daß der Ansaugtakt, während dem Dosierflüssigkeit in den Dosierzylinder gelangt, durch Öffnen des Auslaßventils gegen Atmosphärendruck vorgenommen wird und deshalb kurzzeitig vonstatten geht, während der vom Differenzdruck zwischen den stromauf- und stromabliegenden Leitungsteilen abhängende Impftakt sehr viel länger dauert. Um den Ansprechdifferenzdruck des Systems zu senken, kann anstelle der Druckausgleichsbohrung im Arbeitskolben eine Ventilsteuerung vorgesehen werden, mit der die beiden Arbeitszylinderräume wahlweise mit dem stromaufliegenden Teil der Flüssigkeitsleitung verbindbar sind.

Die Impfmenge ist dabei vorzugsweise proportional der Geschwindigkeit des durchströmenden Mediums. Im Prinzip ist es jedoch auch möglich, die vorliegende Dosiervorrichtung druckabhängig auszulegen, wenn das Ventil derart federbelastet in Schließstellung gehalten wird, daß es erst bei relativ zur Feder vorgegebenem Differenzdruck öffnet.

Eine besonders einfache und damit zuverlässige Flüssigkeitsmengenregelung ergibt sich durch die Durchführung der Impfleitung durch den Kolben. Da diese mit Schlitzen versehen ist, entstehen bei höherem Durchfluß auch größere Austrittsöffnungen durch Verschieben des Kolbens nach hinten.

Die Ventile werden über Schalter, die durch die Endlagen des Arbeitskolbens gesteuert werden, betätigt. Die Schalter und Ventile können mechanisch miteinander verbunden werden.

Vorzuziehen ist eine magnetische Steuerung durch Reedkontakte oder Hallsensoren, wobei im Arbeitskolben ein Magnet und in den Endlagen im den Kolben umgebenden Zylinder die Kontakte (Sensoren) angeordnet sind. Über Schaltverstärker und Stellmotoren können dann die Ventile geöffnet bzw. geschlossen werden.

Bei der vorstehend beschriebenen Vorrichtung verläßt nach jedem Arbeitsgang die Wassermenge Kolbenhub mal Kolbenfläche als Verlustwasser das System über das Ventil. Wo eine derartige Vorrichtung nicht angewendet werden kann, wird eine Abänderung der vorbeschriebenen Konstruktion dahingehend vorgeschlagen, daß zwecks Herstellung einer geschlossenen Abwasserrückführung in der Kegelventilkammer ein verschiebbarer Hilfskolben angeordnet ist, gegen den sich die Feder abstützt, derart, daß bei Bewegung des Hilfskolbens gegen die Federkraft eine Verbindung zwischen Kammer 18 und Leitung 15 herstellbar ist, und daß die rückwärtige Fläche des Hilfskolbens über ein 3/2 Wegeventil mit dem Kanal aus I oder über eine Leitung mit der Kegelventilkammer 18 verbindbar ist.

Auch bei einer derartigen Vorrichtung läßt sich das Ventil mechanisch oder aber vorzugsweise mittels Reedkontakte (Hallsensoren) durch den Arbeitskolben steuern. Dabei wird das vom Arbeitskolben verdrängte Wasser nach Freigabe einer Öffnung im Hilfskolben in den stromabliegenden Teil der Leitung zurück eingespeist.

Eine sehr zuverlässige, fremdenergieunabhängige Wasserrückführungssteuerung ist weiterhin erfindungsgemäß dadurch gekennzeichnet, daß das 3/2 Wegeventil in einer Verbindung zwischen Kegelventilkammer und über dem Arbeitskolben liegenden Raum angeordnet ist und aus einem in einer Ausnehmung angeordneten Ventilstößel mit Kopfplatte, einer gegen diese und den unteren Rand der Ausnehmung abgestützten Feder, einem Verschlußkolben, einer aus ferromagnetischem Material gefertigen Verschlußplatte, sowie einer an die Ausnehmung anschließenden dem Durchmesser des Verschlußkolbens angepaßter Bohrung besteht, an die der Kanal zur Herstellung des Druckausgleichs zwischen der Fläche des Kolbens und dem stromaufliegenden Teil der Leitung anschließt, und daß auf der Bodenplatte des Raumes unterhalb der Bohrung ein den Arbeitskolben in Endstellung überragender Ablösestift und um die Bohrung ein Magnet angeordnet ist.

Eine zuverlässige Abdichtung der Bohrung in Arbeitskolben kann durch einen in die Verschlußplatte eingefügten 0-Ring erhalten werden.

Für die Rückflußsteuerung mit dem Hilfskolben wird vorgeschlagen, daß der Hilfskolben auf einer in die Ventilkammer ragenden Hülse geführt ist, und daß der Hilfskolben einen in die Feder hineinragenden Vorsprung mit durch die Hülse verschließbaren Öffnungen aufweist, wobei der Ablauf an die Hülse angeschlossen ist.

Als Dosierventil kommen Ventile mit Blendenfunktion, d.h. Querschnittsveränderung in Frage. Als ausgesprochen wirksam und funktionssicher hat sich eine Konstruktion erwiesen, bei der das Ventil als Schließkonus mit Ringraum und Rohrstutzen ausgebildet ist, wobei der Ringraum einen größeren Durchmesser aufweist als die Basis des Konus und auch in geschlossenem Zustand des Ventils mit dem stromaufliegenden Teil I der Leitung in Verbindung steht.

Letztlich wird vorgeschlagen, in der Impfleitung für das zu dosierende Medium eine Blende zur Erzeugung definierter Strömungsverhältnisse anzuordnen. Diese kann auch einen veränderbaren Querschnitt aufweisen.

Anhand der beiliegenden Figuren wird die vorliegende Erfindung näher erläutert.

Fig. 1 zeigt den einfachsten Fall, bei dem das zum Hub des Arbeitskolbens nötige Wasser bei dessen Rückkehr über ein Ventil ausgestoßen wird,

Fig. 2 zeigt eine erfindungsgemäße Dosiervorrichtung gleicher Wirkungsweise mit geschlossenem Wasserkreislauf und elektrischer Ventilsteuerung,

Fig. 3 zeigt eine derartige Vorrichtung mit von Fremdenergie unabhängiger mechanisch/magnetischer Ventilsteuerung,

Fig. 4 zeigt eine Prinzipskizze.

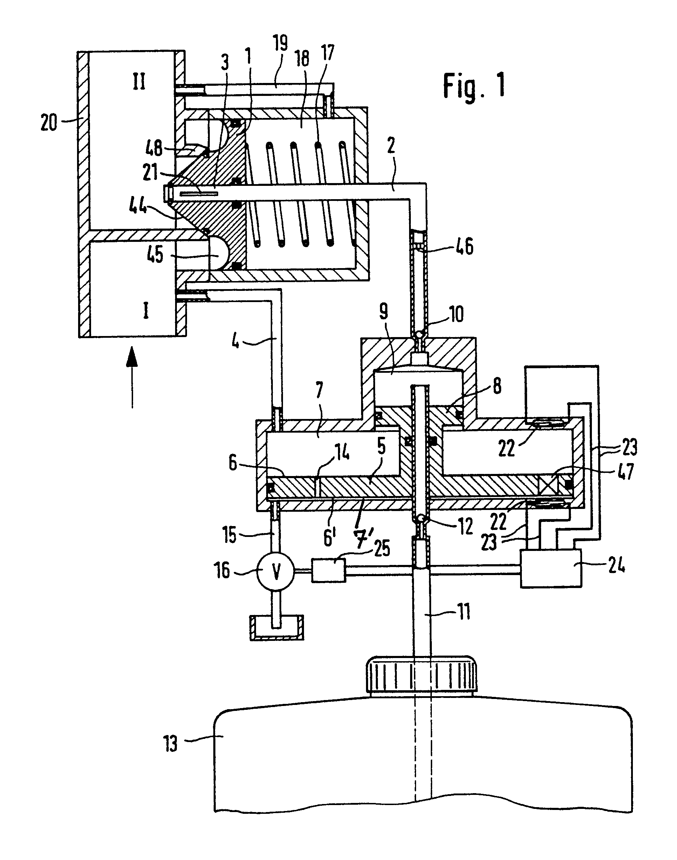

Die erfindungsgemäße Dosiervorrichtung gemäß Fig. 1 zeigt eine Wasserleitung 20 mit durch ein Ventil 1 mit Rohrstutzen 48 und Schließkonus 44, an den sich ein Ringraum 45 anschließt, voneinander getrennten stromauf- und stromabliegenden Teilen I und II. Im geschlossenen Zustand verdeckt der Ventilkörper 1 die Mündung 21 einer Impfleitung 2, durch die die zu dosierende Flüssigkeit in den stromabliegenden Teil II der Wasserleitung 20 abgegeben wird. Das Ventil 1 wird mit Hilfe einer Feder 17 in den dazugehörigen Ventilsitz (Rohrstutzen 48) gedrückt. Die Impfleitung 2 ist durch den Ventilkörper 1 hindurchgeführt und weist im Mündungsbereich 3 Schlitze 21 auf, die je nach Stellung des Ventilkörpers 1 mehr oder weniger freigegeben oder ganz verschlossen werden. Die hinter dem Ventil liegende, die Feder 17 aufnehmende Zylinderkammer 18 ist über eine Druckausgleichsleitung 19 mit dem stromabliegenden Teil II der Wasserleitung verbunden. Die Impf-leitung 2 wird von einem Vorratsbehälter 13 mit Hilfe eines Dosierkolbens 8 gespeist, der in einen Dosierzylinder 9 eingreift. Der Dosierkolben 8 ist mit einem Arbeitskolben 5 verbunden, der eine zum Zylinderraum 7 weisende kleinere Arbeitsfläche 6 und eine zum Zylinderraum 7' weisende größere Arbeitsfläche 6' aufweist. In der Impfleitung 2 befindet sich ein Rückschlagventil 10, während in der zum Vorratsbehälter 13 führenden Saugleitung 11 ein Rückschlagventil 12 angeordnet ist. Die Saugleitung 11 ist dabei durch den Dosierkolben und den Arbeitszylinder zentral hindurchgeführt. Der Arbeitskolben 5 weist eine Bohrung 14 auf, die eine Verbindung zwischen den Arbeitszylinderräumen 7 und 7' herstellt. Der Arbeitszylinderraum 7' ist über einen Ablauf 15 und ein Ventil 16 mit einem Abwassergefäß verbindbar. Der Querschnitt der Bohrung 14 ist dabei kleiner als der Strömungsquerschnitt des Ablaufs 15, so daß eine Druckdifferenz zur Verschiebung des Arbeitskolbens 5 aufgebaut werden kann, um Dosierflüssigkeit aus dem Vorratsbehälter 13 in den Dosierzylinder 9 anzusaugen.

In einem der beiden Kolben ist ein Magnet 47 und diesem in in den Endstellungen gegenüberliegende Reedkontakte 22 angeordnet, in der Zeichnung im größeren Kolben dargestellt. Die Reedkontakte 22 steuern über elektrische Leitungen 23 einen Schaltverstärker 24 an, der mit einem Stellmotor 25 zur Betätigung des Ablaufventils 16 in Verbindung steht.

Der Raum 7 ist über eine Leitung 4 auch mit dem stromaufliegenden Teil I der Wasserleitung verbunden, die den höheren Druck aufweist. In der Leitung 2 kann eine Blende 46 angeordnet sein.

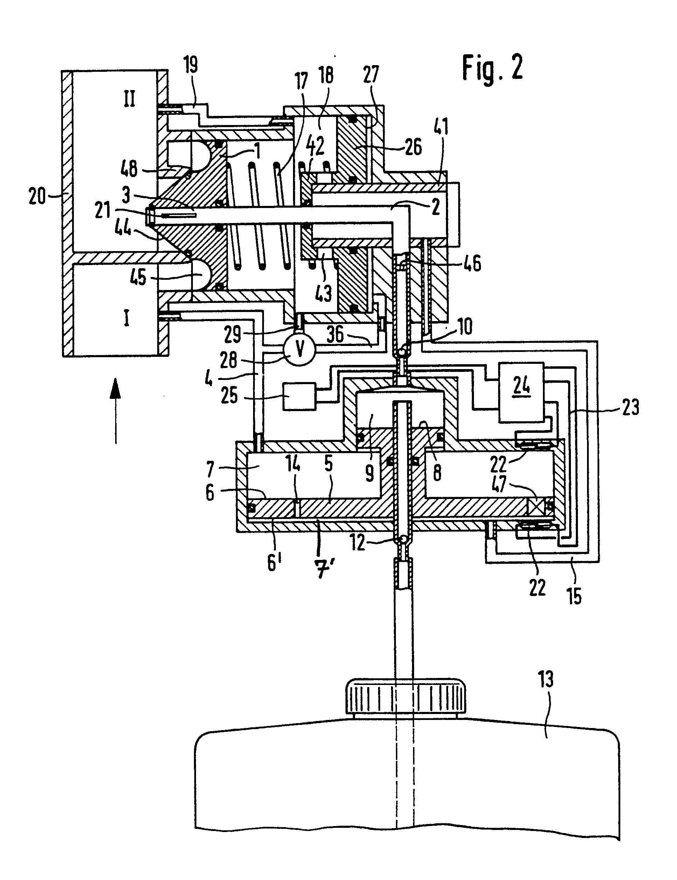

Fig 2 zeigt den erfindungsgemäßen Vorschlag mit geschlossener Abwasserrückführung. Hierzu ist in der die Feder 17 umgebenden Kammer 18 ein auf einer Hülse 41 verschiebbarer Hilfskolben 26 untergebracht.

Der Hilfskolben weist in einem Vorsprung 42 Öffnungen 43 auf, die beim Verschieben des Hilfskolbens in Federwirkrichtung in Endstellung durch die Hülse verschlossen werden. In geöffneter Stellung verbinden die Öffnungen 43 den Raum 18 und die Druckausgleichsleitung 19 mit der Leitung 15, d.h. mit dem rückwärtigen Raum des größeren Kolben 6 und über Bohrung 14, Raum 7 und Kanal 4 auch mit dem stromaufliegenden Teil I der Wasserleitung.

Der der rückwärtigen Fläche 27 des Hilfskolbens 26 zugeordnete Zylinderraum ist über einen Kanal 36, Raum 18 über eine Leitung 29 und ebenfalls Kanal 4 über ein T-Stück mit einem gemeinsamen 3/2 Wegeventil 28 verbunden.

Dieses Ventil wird wiederum von mit einem im Kolben 5 angeordneten Magneten zusammenwirkenden Reedkontakten 22 über Schaltverstärker 24 und Stellmotor 25 gesteuert.

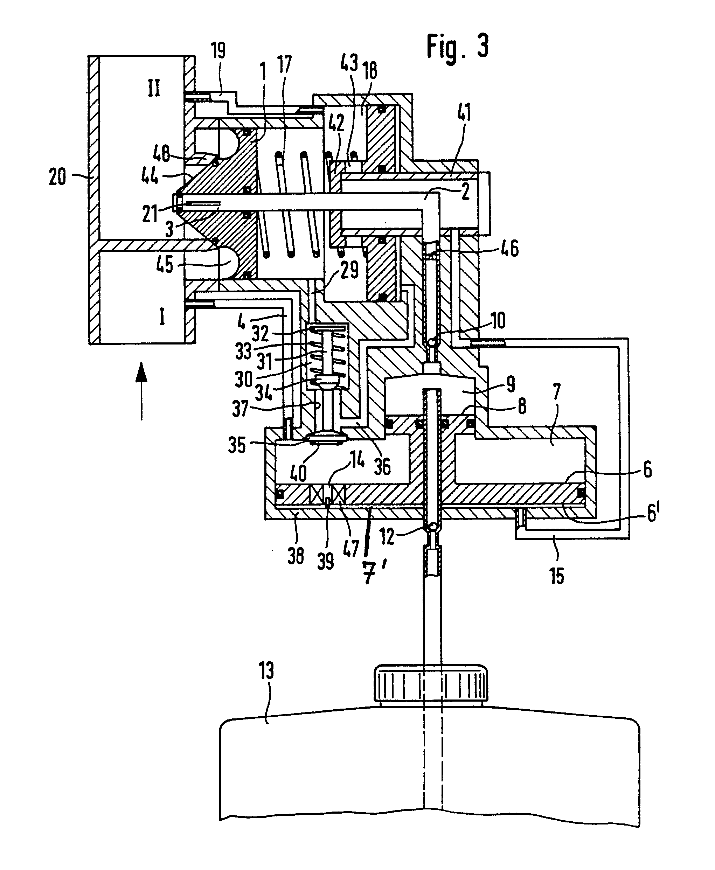

Fig. 3 zeigt eine erfindungsgemäße Vorrichtung mit geschlossener Wasserrückführung, wie in Fig. 2. Das 3/2 Wegeventil ist hier jedoch nicht mit einem Stellmotor verbunden, sondern wirkt fremdenergieunabhängig mechanisch/magnetisch.

Dieses Ventil ist in einer Verbindung zwischen Kammer 18 und Raum 7 angeordnet (Ausnehmung 30). Es besteht aus einem Ventilstößel 31 mit einer Kopfplatte 32 und einer Verschlußplatte 35 an den jeweiligen Enden und dazwischen befindlichem Verschlußkolben 34. Gegen die Kopfplatte und den unteren Rand der Ausnehmung 30 stützt sich eine Feder 33 ab. Die Ausnehmung 30 ist über eine Bohrung 37 mit dem Raum 7 und die Leitung 29 mit der Kammer 18 verbunden, wobei die Bohrung 37 über einen Kanal 36 an den Druckraum der Fläche 27 des Hilfskolbens 26 angeschlossen ist. Die Bohrung 37 wird gleitend vom Verschlußkolben 34 abgedichtet. Die dem Arbeitskolben 5 zugewandte Verschlußplatte 35 ist größer als die Bohrung 37 und dichtet die bei Anschlag gegen den Raum 7 ab.

Der Verschlußplatte 35 gegenüberliegend befindet sich konzentrisch die Druckausgleichsbohrung 14, die von einem Magneten 47 umgeben ist. Die Verschlußplatte ist aus ferromagnetischem Material gefertigt und enthält einen O-Ring 40 zur Abdichtung der Bohrung 14 bei (magnetisch) angezogenem Ventilstößel 31.

Die Bodenplatte 38 des Zylinderaumes 7' weist einen Ablösestift 39 auf, der bei tiefster Stellung des Arbeitskolbens 5 diesen soweit durchdringt, daß die vom Magneten 47 mitgenommene Verschlußplatte 40 bzw. der Ventilstößel 31 vom Magneten 47 getrennt wird.

Der Ablösestift 39 kann konzentrisch zur Bohrung 14 angeordnet sein, muß dann aber einen geringeren Durchmesser aufweisen, damit die Bewegung des Arbeitskolbens 5 bis zur Endstellung vollzogen werden kann. Anstelle eines Ablösestiftes kann äquivalent auch in der Bohrung 37 ein Anschlag für den Verschlußkolben 34 vorgesehen sein, der den Ventilstößel 31 kurz vor Erreichen des unteren Totpunktes des Arbeitskolbens vom Magneten 47 löst.

Die Funktion der erfindungsgemäßen Dosiervorrichtung ist folgende:

In der Wasserleitung entsteht bei Entnahme ein bestimmter Differenzdruck zwischen Raum I und II, wodurch das Ventil 1 gegen die Kraft der Feder 17 geöffnet wird. Wasser strömt vom stromaufliegenden Teil I der Leitung in den stromabliegenden Teil II und weist dort einen verminderten Druck auf.

Der Arbeitskolben 5 befindet sich im oberen Totpunkt (OT). Über den oberen Reedkontakt 22 öffnet der Magnet 47 des Arbeitskolbens mit Hilfe des Schaltverstärkers 24 und des Stellmotors das Ablaßventil 16. Die rückwärtige Kolbenfläche 6' steht damit etwa unter Atmosphärendruck.

Der Arbeitsraum 7 ist mit dem den höheren Wasserdruck aufweisenden Teil I der Leitung über Kanal 4 verbunden. Unter Einfluß dieses Druckes wird der Kolben 5 bewegt und das unter dem Kolben befindliche Wasser über das Ventil 16 ausgestoßen. Der Druckausgleichskanal 14 ist so eng ausgelegt, daß nur relativ wenig Wasser während der Abwärtsbewegung des Kolbens 5 hindurchtritt, wodurch eine ausreichende Druckdifferenz zwischen Kolbenober- und -unterseite erhalten bleibt.

Durch die Bewegung des Kolbens entsteht im Raum 9 ein Unterdruck. Dieser öffnet das Rückschlagventil 12 und über Leitung 11 wird die zu dosierende Chemikalie aus dem Vorratsbehälter 13 in den Raum 9 gesaugt. Das Rückschlagventil 10 wird dadurch geschlossen.

Erreicht der Kolben 5 den unteren Totpunkt (UT), so schließt der Magnet über den Reedkontakt 22 das Ventil 16. Über die Bohrung 14 wird Druckausgleich mit dem Raum 7 hergestellt. Da jedoch die Fläche 6' unter dem Kolben größer ist als diejenige oberhalb der Bohrung 14, hebt sich der Kolben bei Wasserentnahme und verdrängt die Chemikalie über das nun geöffnete Rückschlagventil 10 und die Impfleitung 2 in die Mündung 3, von wo es in den stromabliegenden Teil II der Wasserleitung abgegeben wird. Die Flächen des Arbeitskolbens 5 und die Feder 17 sind dabei so bemessen, daß der Druck in der Impfleitung 2 und dem Raum 9 höher ist als der des Wassers.

Die Mündung der Impfleitung 2 weist Schlitze auf, die vom Ventil 1 mehr oder weniger freigegeben werden. Bei höherem Durchfluß steht somit auch ein größerer Mündungsquerschnitt, bzw. proportionale Schlitzöffnung, zur Verfügung.

Kammer 18 ist zweckmäßigerweise mit dem Niederdruckteil der Wasserleitung über die Druckausgleichsleitung 19 verbunden.

Für eine geschlossene Wasserrückführung werden erfindungsgemäß zwei Vorschläge gemacht.

In Fig. 2 befinde sich der Kolben 5 wiederum im OT. Über Magnet 47 und Reedkontakt wird das 3/2 Wegeventil derart betätigt, daß ein Druckausgleich zwischen dem Hochdruckteil I der Wasserleitung und Fläche 27 des Hilfskolbens 26 über das T-Stück der Leitung 4 und die Leitung 36 erfolgt.

Auf den Hilfskolben 26 wirken damit der geringere Wasserdruck der Kammer 18 und die Kraft der Feder 17 einerseits sowie der Druck der Leitung 36 andererseits. Letztere durch Druck erzeugte Kraft ist größer als die Summe der ersteren Kräfte, wodurch der Hilfskolben 26 längs der Hülse 41 bewegt wird. Die Öffnungen 43 werden freigegeben und über die Leitung 15 kann das unter dem Kolben 5 befindliche Wasser in die Hülse 41 und über Raum 18 und Leitung 19 in den Niederdruckteil der Wasserleitung abgegeben werden.

Nach Erreichen des UT verbindet das 3/2 Wegeventil Raum 18 mit Leitung 36 und sperrt gegen Kanal 4 ab. Damit wirkt auf die Fläche 27 nur noch der niedere Druck des stromab hinter dem Ventil 1 der Wasserleitung liegenden Teils (d.h. der gleiche Druck wie im Raum 18) und unter Einfluß der Feder 17 wird der Hilfskolben 26 auf die Hülse 41 geschoben. Die Öffnungen 43 werden verschlossen.

In der Hülse 41, der Leitung 15 und dem Raum 7 herrscht nun wegen des Druckausgleichs über die Bohrung 14 derselbe Druck wie im Teil I der Wasserleitung. Wegen des Flächenunterschiedes des Arbeitskolbens wird dieser nunmehr angehoben.

Ansaugtakt und Ausstoß der Impfsubstanz erfolgen wie oben.

Es versteht sich, s.o., daß die Bohrung 14 im Vergleich zur Leitung 15 derart bemessen sein muß, daß durch den Strömungswiderstand ein Druckausgleich nicht zu schnell erfolgt.

Das in Fig. 3 dargestellte mechanisch magnetische Ventil wird prinzipiell wie das vorbeschriebene, durch Reedkontakte (oder Hallsensoren) gesteuert.

Wiederum ausgehend vom OT wird der Ventilstößel 31 vom Magneten 47 über den unteren Ventilteller 35 mitgenommen und gegen die Kraft der Feder 33 abwärts bewegt. Dadurch verschließt der Verschlußkolben 34 die Bohrung 37 und damit die Kammer 18 gegen den Hochdruckteil 1 der Wasserleitung, wobei gleichzeitig eine Verbindung zwischen Raum 7 und Leitung 36 hergestellt wird. Der Hilfskolben 26 wird betätigt. Im Bereich des UT senkt sich der Kolben über einen Ablösestift 39 (wodurch Bohrung 14 jedoch nicht verschlossen wird) und trennt den Ventilstößel vom Magneten. Unter Einfluß der Feder 33 hebt er sich wieder und die Verschlußplatte 35 verschließt Bohrung 37 und Leitung 36. Damit kann wiederum ein Druckausgleich über Bohrung 14 erfolgen.

Die Öffnungen 43 des Hilfskolbens 26 schieben sich über die Hülse 41, der Arbeitskolben wird angehoben und stößt die zuvor angesaugte Impfsubstanz gegebenenfalls durch eine Blende 46 über die Leitung 2 aus.

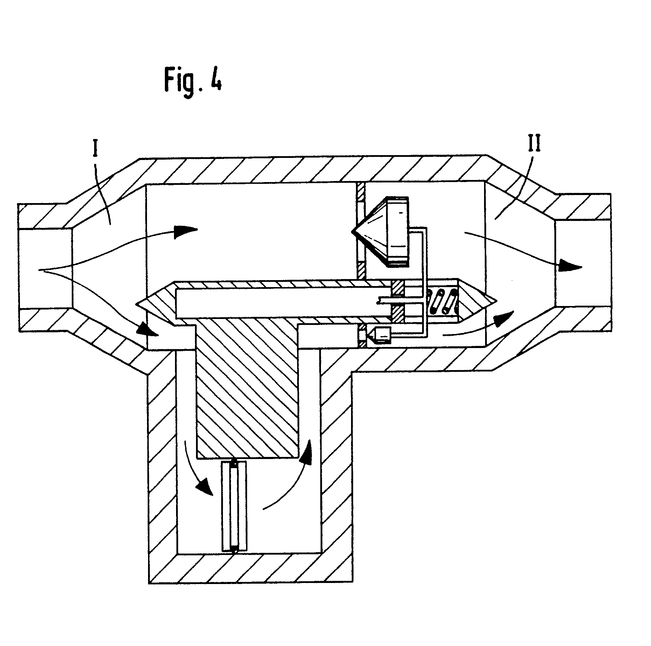

In Fig. 4 ist gezeigt, worauf die vorliegende Erfindung beruht.

Das strömende Medium wird in einen Haupt- und einen Nebenstrom unterteilt. Im Hauptstrom befindet sich ein Kegel, der den freien Querschnitt mit Hilfe einer Blende veränderbar macht. Gegen den Druck der Rückstellfeder, oder aber bei stehender Anordnung auch lediglich gegen das Gewicht des Kegels (Rotameterprinzip) wird er in Strömungsrichtung bis zum Erreichen des jeweiligen Gleichgewichtszustandes mitgenommen. Im stromaufliegenden Teil I herrscht ein höherer Druck als im stromabliegenden.

Im Nebenstrom ist ein Kolben angeordnet. Wegen des in Teil II herrschenden niederen Druckes bewegt sich dieser Kolben in Richtung des Druckgefälles und dosiert Flüssigkeit in den Teil II der Leitung.

Mit dem Kegel steht ein Dosierventil in Verbindung, hier ebenfalls als Blende und Kegel ausgeführt. Beim Öffnen des Hauptstromkegels wird auch dieser geöffnet und gibt einen proportionalen Querschnitt frei, durch den mit Hilfe des Kolbens ein proportionaler Flüssigkeitsstrom ausgestoßen wird.

**Patentansprüche**

1. Dosiervorrichtung zum mengenproportionalen Einspeisen von Dosierflüssigkeit in ein strömendes Medium mit einer in einer Leitung für das strömende Medium angeordneten, die Leitung in einen stromauf- und stromabliegenden Teil (I, II) unterteilenden, nach Maßgabe der Druckdifferenz in ihrem Durchtrittsquerschnitt veränderbaren und bei Stillstand des Mediums schließenden, vorzugsweise als Kegelventil (1) ausgebildeten Blende, mit einem mit dem stromaufliegenden Leitungsteil (I) verbundenen, durch einen Arbeitskolben (5) in zwei Räume (7, 7') geteilten Arbeitszylinder, und mit einem mit dem Arbeitskolben (5) starr verbundenen Dosierkolben (8), der in einen mit einer ein Rückschlagventil (12) enthaltenden, zu einem Dosierflüssigkeitsbehälter (13) führenden Saugleitung (11) und mit einer an ihrer Mündung (3) in den stromabliegenden Leitungsteil (II) führenden, ein Rückschlagventil (10) enthaltenden Impfleitung (2) verbundenen Dosierzylinder (9) eingreift, dadurch gekennzeichnet, daß einer der Arbeitszylinderräume (7) mit dem stromaufliegenden Leitungsteil (I) verbunden ist und der andere Arbeitszylinderraum (7') mit einem unter Atmosphärendruck stehenden oder mit dem stromabliegenden Leitungsteil (II) verbundenen Abwasserablauf (15) verbindbar ist, daß der Arbeitskolben (5) zur stromaufliegenden Anschlußseite hin eine kleinere Kolbenfläche (6) als auf der gegenüberliegenden Seite (6') aufweist, und daß der Mündungsquerschnitt (21) der Impfleitung (2) proportional zum momentanen Blendenquerschnitt einstellbar ist.

2. Dosiervorrichtung nach Anspruch 1, dadurch gekennzeichnet, daß das Kegelventil (1) in einer durch den Ventilkörper (44) gegen das strömende Medium abgedichteten Seitenkammer (18) entgegen der Kraft einer Feder (17) verschiebbar angeordnet ist, daß die Seitenkammer (18) über eine Druckausgleichsleitung mit dem stromabliegenden Leitungsteil (II) verbunden ist, und daß der Ventilsitz des Kegelventils (1) durch einen in der Leitung angeordneten Rohrstutzen (48) gebildet ist.

3. Dosiervorrichtung nach Anspruch 1 oder 2, dadurch gekennzeichnet, daß der Mündungsbereich (3) der Impfleitung (2) Schlitze (21) aufweist, deren freier Austrittsquerschnitt nach Maßgabe des freien Blendenquerschnitts einstellbar ist.

4. Dosiervorrichtung nach einem der Ansprüche 1 bis 3, gekennzeichnet durch ein im Abwasserablauf (15) des Arbeitszylinders angeordnetes durch über den Arbeitskolben (5) betätigbare Endschalter (22) ansteuerbares Ventil (16).

5. Dosiervorrichtung nach Anspruch 4, dadurch gekennzeichnet, daß im Arbeitskolben (5) ein Magnet (47) angeordnet ist und die Endschalter (22) als Reedkontakte, Hallsensoren oder dergleichen ausgebildet sind, die mit einem Verstärker (24) zur Ansteuerung eines Stellmotors (25) des Ventils (16) verbunden sind.

6. Dosiervorrichtung nach einem der Ansprüche 1 bis 5, dadurch gekennzeichnet, daß die Impfleitung (2) durch das Ventil (1) hindurchgeführt und in diesem so angeordnet ist, daß der Ventilkörper (44) den Mündungsbereich (3) der Impfleitung (2) nach Maßgabe seines Öffnungszustandes für den Austritt eines dem Medienstrom proportionalen Flüssigkeitsstrom freigibt.

7. Dosiervorrichtung nach einem der Ansprüche 1 bis 6, dadurch gekennzeichnet, daß in der Seitenkammer (18) zur Herstellung einer geschlossenen Abwasserrückführung ein Hilfskolben (26) entgegen der Kraft einer Feder (17) derart verschiebbar angeordnet ist, daß bei Bewegung des Hilfskolbens (26) gegen den Federdruck eine Verbindung zwischen der Seitenkammer (18) und dem Abwasserablauf (15) des Arbeitszylinders herstellbar ist, und daß die der Seitenkammer (18) gegenüberliegende Druckkammer (27) des Hilfskolbens (26) über ein 3/2-Wegeventil (28) wahlweise mit der Seitenkammer (18) bzw. dem stromabliegenden Leitungsteil (II) einerseits und mit dem stromaufliegenden Leitungsteil (I) andererseits verbindbar ist.

8. Dosiervorrichtung nach Anspruch 7, dadurch gekennzeichnet, daß das 3/2-Wegeventil (28) über durch den Arbeitskolben betätigbare Endschalter ansteuerbar ist.

9. Dosiervorrichtung nach Anspruch 8, dadurch gekennzeichnet, daß die Endschalter als magnetbetätigte Reedkontakte oder Hallsensoren (22) ausgebildet sind.

10. Dosiervorrichtung nach Anspruch 7 oder 8, dadurch gekennzeichnet, daß das 3/2-Wegeventil (28) unter der Einwirkung von Magnetkraft unmittelbar über den Arbeitskolben betätigbar ist.

11. Dosiervorrichtung nach Anspruch 10, dadurch gekennzeichnet, daß das 3/2-Wegeventil in einem Verbindungskanal (29, 30, 37) zwischen der Seitenkammer (18) und dem mit dem stromaufliegenden Leitungsteil (I) verbundenen Arbeitszylinderraum (7) angeordnet ist und aus einem in einer Ausnehmung (30) angeordneten Ventilstößel (31) mit Kopfplatte (32), einer gegen diese und den unteren Rand der Ausnehmung (30) abgestützten Feder (33), einem Verschlußkolben (34), einer aus ferromagnetischem Material gefertigten Verschlußplatte (35) sowie einer an die Ausnehmung (30) anschließenden, dem Durchmesser des Verschlußkolbens (34) angepaßten Bohrung (37) besteht, wobei an die Bohrung (37) ein mit dem rückwärtigen Druckraum (27) des Hilfskolbens (26) verbundener Kanal (36) angeschlossen ist, daß die die beiden Arbeitszylinderräume (7, 7') miteinander verbindende Bohrung (14) im Arbeitskolben durch einen auf das ferromagnetische Material der Verschlußplatte einwirkenden Magneten umschlossen und durch die Verschlußplatte (35) verschließbar ist und daß eine Vorrichtung (39) zum Trennen der Magnetverbindung zwischen Magnet (47) und Verschlußplatte (35) vorgesehen ist.

12. Dosiervorrichtung nach Anspruch 11, dadurch gekennzeichnet, daß die Verschlußplatte (35) einen Dichtungsring (40) zur Abdichtung der Bohrung (14) im Arbeitskolben (5) aufweist.

13. Dosiervorrichtung nach einem der Ansprüche 7 bis 12, dadurch gekennzeichnet, daß der Hilfskolben (26) auf einer in die Seitenkammer (18) eingreifenden, an den Abwasserablauf (15) des Arbeitszylinders angeschlossenen Hülse (41) verschiebbar angeordnet ist, daß der Hilfskolben (26) auf der der Seitenkammer (18) zugewandten Seite einen Deckelvorsprung aufweist, durch den die zur Seitenkammer (18) hin offene Hülse (41) verschließbar ist und der in seinem Mantelbereich Öffnungen (43) aufweist, die in der einen Endstellung des Hilfskolbens (26) durch die Hülsenwand verschließbar sind und in der anderen Endstellung mit der Hülsenöffnung kommunizieren.

14. Dosiervorrichtung nach einem der Ansprüche 1 bis 13, dadurch gekennzeichnet, daß der Schließkörper (44) des Kegelventils (1) auf der radial außenliegenden Seite des Ventilsitzes (48) einen Ringraum (45) begrenzt, der auch in geschlossenem Zustand des Ventils mit dem stromaufliegenden Leitungsteil (I) in Verbindung steht.

15. Dosiervorrichtung nach einem der Ansprüche 1 bis 14, dadurch gekennzeichnet, daß der Querschnitt der Bohrung (14) des Arbeitskolbens (5) kleiner als der Austrittsquerschnitt des Abwasserablaufs (15) des Arbeitszylinders ist.

## Claims

1. A dosing feeder for proportioned feeding of dosing fluid into a flowing medium, comprising: a diaphragm arranged in a line for the flowing medium and dividing said line into a section above and below the flow (I, II) whose throughput cross-section can be modified according to the pressure difference and which seals off the line when the medium is not moving, preferably having the design of a poppet valve (1); a working cylinder communicating with the section of line above the flow (I) and divided into two compartments (7,7') by a working piston (5); and a dosing piston (8) rigidly connected to the working piston (5) and engaging in a dosing cylinder (9) connected to a suction line (11) containing a non-return valve (12) and leading to a dosing fluid tank (13) and to an innoculation line (2) containing a non-return valve (10) and leading at its mouth (3) into the section of line below the flow (II), characterised in that one of the compartments (7) of the working cylinder communicates with the section of line above the flow (I) and the other compartment (7') of the working cylinder can communicate with a waste fluid outlet (15), which is at atmospheric pressure, or connected to the section of line below the flow (II), that a face (6) of the working piston (5) facing the connection side above the flow is smaller than on the opposite side (6'), and that the cross-section (21) of the mouth of the innoculation line (2) can be adjusted in proportion to the cross-section of the diaphragm at any one time.

2. The dosing feeder according to claim 1, characterised in that the poppet valve (1) is located to be displaceable against the force of a spring (17) in a side chamber (18) sealed against the flowing medium by the valve body (44), that the side chamber (18) communicates with the section of line below the flow (II) via a pressure equilising line, and that a pipe connection (48) located in the line forms the seat of the poppet valve (1).

3. The dosing feeder according to claim 1 or 2, characterised in that the mouth area (3) of the innoculation line (2) exhibits slots (21) whose free discharge cross-section can be adjusted in accordance with the free diaphragm cross-section.

4. The dosing feeder according to any of claims 1 to 3, characterised by a valve (16) located in the waste fluid outlet (15) of the working cylinder and controlled by limit switches (22) actuated via the working piston (5).

5. The dosing feeder according to claim 4, characterised in that a magnet (47) is disposed in the working piston (5) and the lirnit switches (22) are designed as reed relays, Hall sensors or similar, linked to an amplifier (24) to control a servomotor (25) for the valve (16).

6. The dosing feeder according to any of claims 1 to 5, characterised in that the innoculation line (2) passes through the valve (1) and is disposed therein such that the valve body (44) uncovers the mouth area (3) of the innoculation line (2) according to how far it is open to allow a stream of fluid proportional to the medium stream to be discharged.

7. The dosing feeder according to any of claims 1 to 6, characterised in that forming a closed waste fluid return system an auxiliary piston (26) is disposed in the side chamber (18) to be displaceable against the force of a spring (17) such that when the auxiliary piston (26) is moved against the force of the spring the side chamber (18) can be made to communicate with the waste fluid outlet (15) of the working cylinder, and that the pressure chamber (27) of the auxiliary piston (26) opposing the side chamber (18) can communicate via a 3/2-way valve (28) with the side chamber (18) and either the section of line below the flow (II) or the section of line above the flow (I).

8. The dosing feeder according to claim 7, characterised in that the 3/2-way valve (28) is controlled by limit switches actuated by the working piston.

9. The dosing feeder according to claim 8, characterised in that the limit switches are designed as magnetically actuated reed relays or Hall sensors (22).

10. The dosing feeder according to claim 7 or 8, characterised in that the 3/2-way valve (28) can be actuated directly via the working piston under the action of magnetism.

11. The dosing feeder according to claim 10, characterised in that the 3/2-way valve is located in a communication channel (29, 30, 37) between the side chamber (18) and the working cylinder compartment (7) communicating with the section of line (I) above the flow and comprises a valve tappet (31) with top plate (32) located in a recess (30), a spring (33) braced against said top plate and the lower rim of the recess (30), a shut-off piston (34)', a sealing plate (35) made of ferromagnetic material, and a drillhole (37) which forms a continuation of the recess (30) and matches the diameter of the shut-off piston (34), a channel (36) communicating with the rear pressure chamber (27) of the auxiliary piston (26), that the drillhole (14) in the working piston which connects the two compartments (7, 7') of the working cylinder is enclosed by a magnet acting on the ferromagnetic material of the sealing plate and can be closed off by the sealing plate (35), and that a device (39) is provided to break the magnetic contact between the magnet (47) and the sealing plate (35).

12. The dosing feeder according to claim 11, characterised in that the sealing plate (35) exhibits a sealing ring (40) for sealing off the drillhole (14) in the working piston (5).

13. The dosing feeder according to any of claims 7 to 12, characterised in that the auxiliary piston (26) is displaceably arranged on a sleeve (41) engaging in the side chamber (18) of the working cylinder and forming a continuation of the waste fluid outlet (15) of the working cylinder, that on the side facing the side chamber (18) the auxiliary piston (26) exhibits a cover projection by means of which the sleeve (41), which is open towards the side chamber (18), can be closed off and which in its casing region exhibits openings (43) which can be closed off by the sleeve wall in one limit position of the auxiliary piston (26) and in the other limit position communicate with the opening in the sleeve.

14. The dosing feeder according to any of claims 1 to 13, characterised in that on the radially outer face of the valve seat (48) the sealing body (44) of the poppet valve (1) delimits an annular space (45), which is connected to the section of line (I) above the flow even when the valve is closed.

15. The dosing feeder according to any of claims 1 to 14, characterised in that the cross-section of the drillhole (14) of the working piston (5) is smaller than the discharge cross-section of the waste fluid outlet (15) of the working cylinder.

**Revendications**

1. Dispositif de dosage pour l'injection d'un fluide, proportionnelle au débit, dans des milieux courants, avec un obturateur, représenté de préférence par une soupape à siège oblique (1), monté sur une conduite d'écoulement des milieux précités, qu'il subdivise en une section amont et aval (I, II), la position de cet obturateur, fermé avec l'arrêt de l'écoulement, étant modifiée par la différence de pression dans la section de passage de la conduite, avec un cylindre de travail relié à la section amont (I) et subdivisé par un piston moteur (5) en deux compartiments (7, 7'), et avec un piston doseur (8), solidaire du piston (5), qui s'engage dans un cylindre doseur (9) relié à une conduite d'aspiration (11), équipée d'un clapet antiretour (12) et débouchant dans un réservoir (13), prévu pour le fluide à doser, d'une part, à une conduite d'injection (2), munie d'un clapet antiretour (10) et dont l'ouverture (3) débouche dans la section aval (II), d'autre part, caractérisé en ce que l'un des compartiments (7) du cylindre de travail est relié à la section de conduite amont (I), l'autre compartiment (7') pouvant être relié à une évacuation des eaux usées (15), soumise à la pression atmosphérique ou raccordée à la section de conduite aval (II), en ce que la surface (6) du piston moteur (5), côté raccordement amont, est inférieure à la surface (6'), située de l'autre côté, et en ce que la section d'ouverture (21) de la conduite d'injection (2) présente une possibilité de réglage, proportionnel à la section instantanée de l'obturateur.

2. Dispositif de dosage suivant la revendication 1, caractérisé en ce que la soupape à siège oblique (1) est montée et peut se déplacer, contre la force d'un ressort (17), dans un compartiment latéral (18), dont l'étanchéité par rapport aux milieux courants est assurée par le corps de soupape (44), en ce que le compartiment (18) est relié à la section aval (II) par l'intermédiaire d'une conduite d'équilibrage, et en ce que le siège de la soupape (1) est formé par une tubulure (48), disposée dans la conduite.

3. Dispositif de dosage suivant l'une des revendications 1 et 2, caractérisé en ce que la zone d'ouverture (3) de la conduite d'injection (2) présente des fentes (21), dont la section libre de sortie est réglée en fonction de la section libre de l'obturateur.

4. Dispositif de dosage suivant l'une quelconque des revendications 1 à 3, caractérisé par une vanne (16), montée dans l'évacuation des eaux usées (15) du cylindre de travail et pilotée par des fins de course (22), que le piston moteur (5) permet d'actionner.

5. Dispositif de dosage suivant la revendication 4, caractérisé par un aimant (47) monté dans le piston moteur (5), les fins de course (22) étant représentés par des relais Reed, des capteurs à effet Hall ou autres, reliés à un amplificateur (24) pour la commande d'un servomoteur (25) de la vanne (16).

6. Dispositif de dosage suivant l'une quelconque des revendications 1 à 5, caractérisé en ce que la conduite d'injection (2) traverse la soupape (1), et présente dans cette dernière un montage tel, que le corps de soupape (44) libère la zone d'ouverture (3) de la conduite (2), suivant son état d'ouverture, pour la sortie d'un courant de fluide proportionnel à l'écoulement des milieux.

7. Dispositif de dosage suivant l'une quelconque des revendications 1 à 6, caractérisé en ce que, en vue d'obtenir un recyclage fermé des eaux usées, un piston auxiliaire (26) est monté et peut se déplacer dans le compartiment latéral (18) contre la force d'un ressort (17), de manière à pouvoir établir, avec un déplacement de ce piston (26) contre la pression du ressort, une liaison entre le compartiment (18) et l'évacuation des eaux usées (15) du cylindre de travail, et en ce que le compartiment de pression (27) du piston auxiliaire (26), opposé au compartiment latéral (18), peut être relié, par l'intermédiaire d'une vanne 3/2 (28), avec le compartiment (18) et/ou la section aval (II) d'une part, avec la section amont (I) d'autre part.

8. Dispositif de dosage suivant la revendication 7, caractérisé en ce que les fins de course, actionnés par le piston moteur, peuvent piloter la vanne 3/2 (28).

9. Dispositif de dosage suivant la revendication 8, caractérisé en ce que les fins de course sont représentés par des capteur à effet Hall (22) ou par des relais Reed à commande magnétique.

10. Dispositif de dosage suivant l'une des revendications 7 et 8, caractérisé en ce que la vanne 3/2 (28) peut être actionnée directement par le piston moteur, sous l'effet de la force magnétique.

11. Dispositif de dosage suivant la revendication 10, caractérisé en ce que la vanne 3/2, montée sur un conduit de raccordement (29, 30, 37) entre le compartiment latéral (18) et le compartiment (7) du cylindre de travail, relié à la section de conduite amont (I), se compose d'un poussoir (31) avec une plaque de tête (32), disposé dans un évidement (30), d'un ressort (33) qui s'appuie sur cette plaque et sur le bord inférieur de l'évidement (30), d'un piston de fermeture (34), d'une plaque de fermeture (35) en matériau ferromagnétique, ainsi que d'un alésage (37) situé dans le prolongement de l'évidement (30) et adapté au diamètre du piston de fermeture (34), un conduit (36), relié au compartiment de pression arrière (27) du piston auxiliaire (26), étant raccordé à l'alésage (37), en ce que l'alésage (14), prévu dans le piston moteur et reliant les deux compartiments (7, 7') du cylindre de travail, est enveloppé par un aimant, dont l'effet s'exerce sur le matériau ferromagnétique de la plaque de fermeture (35), qui permet de fermer cet alésage, et en ce qu'un dispositif (39) est prévu pour couper la liaison magnétique entre l'aimant (47) et la plaque (35).

12. Dispositif de dosage suivant la revendication 11, caractérisé en ce que la plaque de fermeture (35) est munie d'un joint d'étanchéité (40) pour l'alésage (14), prévu dans le piston moteur (5).

13. Dispositif de dosage suivant l'une quelconque des revendications 7 à 12, caractérisé en ce que le piston auxiliaire (26) est monté et peut se déplacer sur une douille (41), pénétrant dans le compartiment latéral (18) et raccordée à l'évacuation des eaux usées (15) du cylindre de travail, en ce que le piston (26) présente, sur son côté tourné vers le compartiment latéral (18), un couvercle en saillie qui permet de fermer la douille (41), ouverte sur le compartiment (18), et dont la zone latérale présente des ouvertures (43), fermées par la paroi de la douille dans l'une des positions finales du piston (26) et communiquant avec l'ouverture de cette douille dans l'autre position finale.

14. Dispositif de dosage suivant l'une quelconque des revendications 1 à 13, caractérisé en ce que le corps (44) de la soupape à siège oblique (1) limite, sur le côté radial externe du siège (48), un compartiment annulaire (45) relié à la section amont (I), même lorsque la soupape est fermée.

15. Dispositif de dosage suivant l'une quelconque des revendications 1 à 14, caractérisé en ce que la section de l'alésage (14), prévu dans le piston moteur (5), est inférieure à la section de sortie de l'évacuation des eaux usées (15) du cylindre de travail.

Fig. 1

Fig. 2

Fig. 3

# Fig. 4